# EUROPÄISCHE PATENTSCHRIFT

(11) **EP 4 721 900 B1**
(45) Veröffentlichungstag und Bekanntmachung des Hinweises auf die Patenterteilung: **26.08.2026**
(21) Anmeldenummer: 24204687.8
(22) Anmeldetag: 04.10.2024
(51) Int. Cl.: B23D 7/10, B23D 3/02, B23D 1/10

(54) **ANGETRIEBENE WERKZEUGEINHEIT ZUM NUTENSTOSSEN UND WERKZEUGMASCHINE**
DRIVEN TOOL UNIT FOR SLOTTING AND MACHINE TOOL
UNITÉ D'OUTIL MOTORISÉE POUR LE RAINURAGE DE RAINURES ET MACHINE-OUTIL

(43) Veröffentlichungstag der Anmeldung: 08.04.2026
(73) Patentinhaber: heimatec GmbH Präzisionswerkzeuge, 77871 Renchen (DE)
(72) Erfinder: Fiedler, Harald, 67410 Drusenheim (DE); Ritter, Felix, 76137 Karlsruhe (DE); Moser, Michael, 77652 Offenburg (DE)
(74) Vertreter: Mertzlufft-Paufler, Cornelius

(56) Entgegenhaltungen:
- EP-B1- 0 005 831
- CN-B- 114 346 330
- GB-A- 575 192

## Beschreibung

Die Erfindung betrifft eine angetriebene Werkzeugeinheit zum Nutenstoßen umfassend einen Stoßschlitten, einen Werkzeugträger und eine Antriebswelle. Ferner betrifft die Erfindung auch eine Werkzeugmaschine mit einer solchen Werkzeugeinheit.

Derartige Werkzeugeinheiten werden beispielsweise zur Herstellung von Nuten oder Profilen genutzt.

Aus der DE 10 2013 218 507 A1 ist eine Vorrichtung zum Nutenstoßen vorbekannt, umfassend ein Gehäuse, eine Antriebswelle, einen Stoßschlitten und einen Werkzeugträger, wobei die Antriebswelle und der Stoßschlitten über einen Kurbeltrieb miteinander gekoppelt sind und der von der Antriebswelle angetriebene Stoßschlitten eine oszillierende Bewegung (Schnittbewegung und Rückhub) ausführt, wobei der Stoßschlitten in dem Gehäuse aufgenommen und gelagert ist, wobei zwischen dem Gehäuse und dem Stoßschlitten eine Hülse angeordnet ist, und wobei zwischen dem Gehäuse und der Hülse und/oder der Hülse und dem Stoßschlitten mindestens eine Dichtung vorgesehen ist.

Die Druckschrift EP 0 005 831 B1 offenbart eine Vorrichtung zum Innenverzahnen großer Werkstücke an einer Zahnradstoßmaschine mit einem Maschinenbett, auf dem ein Werkstücktisch zum Aufspannen eines Werkstückes und ein Ständer in Bezug aufeinander um die Rotationsachse drehbar und radial zu dieser zustellbarer angeordnet sind. Der Ständer weist eine Führung auf, längs der ein Stößel mittels eines Stoßantriebs hin und her bewegbar ist.Aufgabe der Erfindung ist die Bereitstellung einer zum Stand der Technik alternativen Werkzeugeinheit, die sich durch ihre Gebrauchseigenschaften auszeichnet.

Zur Lösung der Aufgabe wird eine angetriebene Werkzeugeinheit mit den Merkmalen des unabhängigen, auf eine derartige angetriebene Werkzeugeinheit gerichteten Anspruchs vorgeschlagen. Konkret wird zur Lösung der Aufgabe somit eine angetriebene Werkzeugeinheit zum Nutenstoßen umfassend einen Stoßschlitten, einen Werkzeugträger und eine Antriebswelle vorgeschlagen. Die Antriebswelle und der Stoßschlitten sind über ein Getriebe miteinander antriebsverbunden, wobei das Getriebe zumindest eine Zahnstange und zumindest zwei Stirnzahnräder, nämlich ein Vorschubzahnrad und ein Rückhubzahnrad, umfasst, die jeweils nur über einen Teilumfang ihrer Stirnflächen verzahnt sind. Das Vorschubzahnrad ist zur Übertragung einer Vorschubbewegung auf den Stoßschlitten eingerichtet. Das Rückhubzahnrad ist zur Übertragung einer Rückhubbewegung auf den Stoßschlitten eingerichtet. Das Getriebe kann als Zahnstangengetriebe bezeichnet werden. Somit kann eine angetriebene Werkzeugeinheit zum Nutenstoßen geschaffen werden, bei der die Vorschubbewegung, also ein Stoßen, von dem Vorschubzahnrad auf den Stoßschlitten übertragen wird. Eine Rückhubbewegung auf den Stoßschlitten kann hingegen von dem Rückhubzahnrad übertragen werden. Dadurch dass die Stirnzahnräder nur über einen Teil ihres jeweiligen Umfangs verzahnt sind, kann eine alternierende Vor- und Zurückbewegung erreichbar sein, wobei sich die Antriebswelle aber stets in eine Richtung dreht. Die erfindungsgemäße Werkzeugeinheit zeichnet sich nicht nur durch ihre guten Gebrauchseigenschaften, sondern auch durch ihre vergleichsweise kompakte Bauform aus. So lässt sich die Werkzeugeinheit auch dann noch einfach an einer Werkzeugmaschine verwenden, wenn nur wenig Bauraum zur Verfügung steht.

Bei einer vorteilhaften Ausführungsform kann das Getriebe zumindest eine Getriebestufe umfassen, mit der eine Drehbewegung der Antriebswelle in gegenläufige Drehbewegungen der Stirnzahnräder umwandelbar ist. Die Werkzeugeinheit kann selbst ohne Antrieb ausgestattet sein. Es ist möglich, die Werkzeugeinheit über die Antriebswelle über einen externen Antrieb anzutreiben. Das Getriebe, insbesondere die Getriebestufe, kann Kegelräder umfassen, die eine Kegelradstufe bilden, die die Drehbewegung der Antriebswelle zumindest mittelbar auf das Rückhubzahnrad überträgt, welches die Rückhubbewegung erzeugt. Das Rückhubzahnrad kann sich beispielsweise entgegen dem Uhrzeigersinn drehen.

Bei einer vorteilhaften Ausführungsform kann zumindest eine Zahnstange des Getriebes mit dem Stoßschlitten verbunden sein. Somit kann eine Bewegung der zumindest einen Zahnstange auf den Stoßschlitten übertragen werden.

Bei einer vorteilhaften Ausführungsform kann die Werkzeugeinheit ein Federelement umfassen, mit dem der Stoßschlittens in zumindest einer Bewegungsrichtung gefedert und/oder gedämpft gelagert ist. Hierdurch kann beispielsweise ein Anschlag des Stoßschlittens an einem Gehäuse abgefedert und/oder abgedämpft werden. Insbesondere kann vorgesehen sein, dass das Federelement ein Feder-Dämpfer-Element ist. Das Feder-Dämpfer-Element kann eine Bewegung des Stoßschlittens, insbesondere in zumindest einem seiner beiden Umkehrpunkte, dämpfen und federn. Insbesondere kann weiter vorgesehen sein, dass der Stoßschlitten in seiner Vorschubbewegung und/oder in seiner Rückhubbewegung, beispielsweise in beiden Umkehrpunkten seiner Bewegung, gefedert und/oder gedämpft gelagert ist. Das Federelement kann als Energiespeicher dienen, um den Stoßschlitten aus seiner hinteren Endlage in Richtung der Vorschubbewegung zu beschleunigen. Bei einer Ausführungsform ist vorgesehen, dass das Federelement als Energiespeicher dient, um den Stoßschlitten aus seiner vorderen Endlage in Richtung der Rückhubbewegung zu beschleunigen. Das Vorschubzahnrad kann dann in die Zahnstange am bereits in Vorschubrichtung beschleunigten Stoßschlitten eingreifen, um den Stoßschlitten weiter anzutreiben. Die Aufnahme des bewegten Stoßschlittens durch das Vorschubzahnrad kann Stöße vermeiden, das Vorschubzahnrad und die Zahnstange schonen und insgesamt zu einem ruhigeren Lauf der angetriebenen Werkzeugeinheit beitragen. Das Federelement, insbesondere das Feder-Dämpfer-Element, kann bevorzugt für beide Bewegungen des Stoßschlittens, also für die Vorschubbewegung und für die Rückhubbewegung gleichermaßen relevant sein, also beispielsweise beide Bewegungen dämpfen und/oder zu einer Beschleunigung des Stoßschlittens aus einem oder beiden Umkehrpunkten in den zuvor erwähnten Endlagen seiner Bewegung beitragen.

Das Federelement kann zumindest ein Tellerfederpaket umfassen. Tellerfedern des Tellerfederpakets können einen Impuls des Stoßschlittens, wenn dieser sich in der Rückhubbewegung befindet, aufnehmen und den Stoßschlitten somit abbremsen und seine Rückhubbewegung verlangsamen. Die aufgenommene Energie kann wieder auf den Stoßschlitten übertragen werden, um diesen in die Vorschubbewegung zu beschleunigen.

Bei einer vorteilhaften Ausführungsform kann die Werkzeugeinheit einen Abhebemechanismus umfassen, der zur Ausführung einer Abhebebewegung des Werkzeugträgers quer zur Rückhubbewegung eingerichtet ist. Der Werkzeugträger trägt zum Nutenstoßen ein Werkzeug zur spanenden Bearbeitung des Werkstücks. Hierbei ist es vorteilhaft wenn das Werkzeug bei der Rückhubbewegung von dem Werkstück abgehoben wird, damit das Werkzeug in der Rückhubbewegung nicht am Werkstück reibt. Der Abhebemechanismus ermöglicht ein Abheben des Werkzeugs.

Bei einer vorteilhaften Ausführungsform kann der Abhebemechanismus einen Kipphebel umfassen, an dem der Werkzeugträger angeordnet ist. Der Kipphebel ist zur Ausführung der quer zur Rückhubbewegung des Stoßschlittens ausgerichteten Abhebebewegung des Werkzeugträgers kippbar an dem Stoßschlitten gelagert. Die Abhebebewegung kann durch den Kipphebel besonders einfach erreicht werden, da der Kipphebel nur um eine Achse des Kipphebels kippen muss und den Werkzeugträger so von dem Werkstück abheben kann.

Bei einer vorteilhaften Ausführungsform kann vorgesehen sein, dass der Abhebemechanismus eine Linearachse und einen Kniehebel aufweist, wobei die Linearachse über den Kniehebel mit dem Kipphebel verbunden ist. Der Kniehebel ist zur Umsetzung einer linearen Bewegung der Linearachse in die Abhebebewegung des Werkzeugträgers eingerichtet und zu diesem Zweck mit dem Kipphebel verbunden. Somit kann eine lineare Bewegung der Linearachse in eine Bewegung des Kniehebels umgesetzt werden, die letztendlich über die Verbindung zwischen dem Kniehebel und dem Kipphebel zum Abheben des Werkzeugträgers von einem Werkstück führen kann.

Bei einer vorteilhaften Ausführungsform kann vorgesehen sein, dass der Stoßschlitten eine Kipphebel-Aufnahme aufweist, in der der Kipphebel kippbar gelagert ist. Der Kipphebel kann somit an zwei Lagern gelagert sein, nämlich an dem Kniehebel und in der Kipphebel-Aufnahme. Somit kann der Kipphebel eine Abhebebewegung durchführen. Die Werkzeugeinheit kann eine Hülse aufweisen, die den Kipphebel und/oder die Kipphebel-Aufnahme umgibt. Die Hülse kann den Kipphebel und/oder die Kipphebel-Aufnahme vor Verschmutzung schützen und zudem ein Abdichten der Werkzeugeinheit vereinfachen. Der Kipphebel kann auch in der Kipphebel-Aufnahme kippbar gelagert sein.

Bei einer vorteilhaften Ausführungsform kann vorgesehen sein, dass die Linearachse entlang einer Längsführung längsverschieblich am Stoßschlitten gelagert ist. Da die Linearachse mit dem Kniehebel verbunden sein kann, ermöglicht diese längsverschiebliche Lagerung eine Bewegung des Kniehebels.

Die Linearachse kann zwei Linearverzahnungen, also beispielsweise Zahnstangenbereiche, aufweisen, von denen eine dem Vorschubzahnrad und eine dem Rückhubzahnrad zugeordnet ist. Eine Linearverzahnung kann somit mit dem Vorschubzahnrad in Eingriff gebracht werden, während die andere Linearverzahnung mit dem Rückhubzahnrad in Eingriff gebracht werden kann. Die Linearverzahnung die mit dem Vorschubzahnrad in Eingriff gebracht werden kann, kann größer und/oder massiger und/oder stabiler ausgebildet sein, so dass diese Linearverzahnung mehr Kraft aufnehmen kann als beispielsweise die andere Linearverzahnung, die mit dem Rückhubzahnrad in Eingriff geht. So kann die dem Vorschubzahnrad zugeordnete Linearverzahnung den Bearbeitungskräften, die beim Vorschub auftreten, standhalten.

Als Linearverzahnung kann ein Zahnstangenbereich vorgesehen sein, der eine Reihe an entlang einer Linie angeordnete Zähne umfasst.

Bei einer vorteilhaften Ausführungsform kann vorgesehen sein, dass die Linearverzahnungen so an der Linearachse angeordnet sind, dass die Linearachse bei Eingriff des Rückhubzahnrads in einer ersten Endposition ihrer Längsführung angeordnet ist. Insbesondere kann die Linearachse bei Eingriff des Rückhubzahnrads in einer in Stoßrichtung hinteren Endposition in ihrer Längsführung angeordnet sein. Bei Eingriff des Rückhubzahnrads kann ein Versatz zwischen der Linearverzahnung für das Rückhubzahnrad und der Linearverzahnung am Stoßschlitten für das Rückhubzahnrad so verringert werden, dass es zu einer Kniehebelbewegung kommen kann, die den Werkzeugträger abhebt. Zusätzlich kann die Linearverzahnung so an der Linearachse angeordnet sein, dass die Linearachse bei Eingriff des Vorschubzahnrads in einer zweiten Endposition in ihrer Längsführung angeordnet ist. Insbesondere kann die Linearachse bei Eingriff des Vorschubzahnrads in einer in Stoßrichtung vorderen Endposition in ihrer Längsführung angeordnet sein. Bei Eingriff des Vorschubzahnrads in die Linearverzahnung kann ein Versatz zwischen der Linearverzahnung für das Vorschubzahnrad und der Linearverzahnung am Stoßschlitten für das Vorschubzahnrad so verringert werden, dass der Werkzeugträger die Stoßbewegung ohne Winkelveränderung und ohne Abhebung ausführen kann.

Bei einer vorteilhaften Ausführungsform kann vorgesehen sein, dass die Linearverzahnungen der Linearachse denselben Zahnabstand wie die zumindest eine Zahnstange des Stoßschlittens aufweist. Die Linearverzahnungen der Linearachse und die Linearverzahnung der zumindest einen Zahnstange können somit in Überdeckung sein, wenn sie von einem selben Zahn eines Stirnzahnrads gegriffen werden. Damit können die beiden Linearverzahnungen von demselben Zahn eines Stirnzahnrands angetrieben werden. Haben die Linearverzahnung der Linearachse für das Rückhubzahnrad und die Linearverzahnung des Stoßschlittens für das Rückhubzahnrad denselben Zahnabstand, kann es zu einer Hebelbewegung im Kniehebel kommen und folglich zu einer Abhebebewegung. Haben die Linearverzahnung der Linearachse für das Vorschubzahnrad und die Linearverzahnung des Stoßschlittens für das Vorschubzahnrad denselben Zahnabstand, kommt es nicht zu einer Hebelbewegung im Kniehebel und folglich kann der Werkzeugträger ohne Winkelveränderung und ohne Abhebung eine Stoßbewegung ausführen.

Bei einer vorteilhaften Ausführungsform kann die Werkzeugeinheit einen Ausrichtmechanismus aufweisen, mit dem eine Winkelstellung des Werkzeugträgers in zumindest einem Freiheitsgrad einstellbar ist. Somit kann der Werkzeugträger der Werkzeugeinheit verkippt werden. Alternativ oder zusätzlich kann eine Position des Werkzeugträgers in zumindest einem Freiheitsgrad einstellbar sein. Somit kann der Werkzeugträger vorteilhaft gegenüber der Werkzeugeinheit feinjustierbar ausgerichtet werden. Insbesondere kann die Winkelstellung und/oder Position des Werkzeugträgers relativ zu einer Basis der Werkzeugeinheit in zumindest einem Freiheitsgrad einstellbar sein. Der Werkzeugträger kann somit relativ zur Basis der Werkzeugeinheit in einem Winkel und/oder einer Position verstellbar sein. Insbesondere kann die Winkeleinstellung und/oder Position des Werkzeugträgers relativ zu einer Basis der Werkzeugeinheit in zumindest einem Freiheitsgrad in einer quer zur Vorschubbewegung des Stoßschlittens ausgerichteten Raumachse einstellbar sein. Der Werkzeugträger kann folglich in einer Bewegung quer zur Vorschubbewegung des Stoßschlittens feinjustiert werden.

Bei einer vorteilhaften Ausführungsform kann der Ausrichtmechanismus zur Positionierung des Werkzeugträgers zumindest einen Gleitstein aufweisen. Der Werkzeugträger kann beispielsweise mittels Schrauben relativ zu dem Gleitstein positionierbar sein.

Bei einer vorteilhaften Ausführungsform kann der Ausrichtmechanismus dazu eingerichtet sein, eine Winkelstellung des Werkzeugträgers um zumindest eine quer zur Vorschubbewegung ausgerichtete Raumachse einzustellen. Beispielsweise kann das Gehäuse an einem Ende relativ zur Basis angehoben oder abgesenkt werden. Somit kann eine Feinjustierung in einem Winkel um zumindest eine Raumachse erzielt werden, wobei die zumindest eine Raumachse quer zur Vorschubbewegung ausgerichtet sein kann.

Bei einer vorteilhaften Ausführungsform kann der Ausrichtmechanismus dazu eingerichtet sein, die Winkelstellung der Werkzeugeinheit relativ zu einer Befestigungsschnittstelle einer mit der Werkzeugeinheit ausgestatteten Werkzeugmaschine um eine Rotationsachse der Antriebswelle der Werkzeugeinheit einzustellen. Sollte eine Einstellung um eine Rotationsachse der Antriebswelle der Werkzeugeinheit notwendig sein, kann die Einstellung mit dem Ausrichtmechanismus vorgenommen werden.

Bei einer vorteilhaften Ausführungsform kann die Werkzeugeinheit eine Basis zum Anschluss der Werkzeugeinheit an eine Befestigungsschnittstelle einer Werkzeugmaschine aufweisen, wobei die Antriebswelle an der Basis angeordnet ist. Die Basis kann also auf eine von einem Motor abgehende Antriebswelle montiert werden. Die Befestigung der Basis an der Werkzeugmaschine kann dabei über Schrauben erfolgen.

Zur Lösung der Aufgabe wird außerdem eine Werkzeugmaschine mit den Merkmalen des unabhängigen, auf eine derartige Werkzeugmaschine gerichteten, Anspruchs vorgeschlagen. Konkret wird zur Lösung der Aufgabe somit eine Werkzeugmaschine mit einer Werkzeugeinheit nach einem der auf eine solche gerichteten Ansprüche vorgeschlagen.

Zur Lösung der Aufgabe wird weiter ein Verfahren zum Nutenstoßen mit einer Werkzeugeinheit nach einer der zuvor beschriebenen Ausführungsformen vorgeschlagen, umfassend wenigstens folgende Schritte:
- Übertragung einer Antriebsbewegung, insbesondere einer Drehbewegung, eines zumindest über einen Teilumfang verzahnten Stirnzahnrads auf eine Zahnstange, wobei die Zahnstange mit dem Stoßschlitten verbunden ist;
- lineare Bewegung des Stoßschlittens entlang der Längsachse der Werkzeugeinheit;
- Dämpfung der linearen Bewegung des Stoßschlittens durch das Dämpfungselement, insbesondere wenigstens eine Tellerfeder.

Die Erfindung wird nachfolgend anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigen
- Fig. 1: eine Werkzeugeinheit in perspektivischer Ansicht,
- Fig. 2: die Werkzeugeinheit aus Fig. 1 in perspektivischer Explosionsdarstellung,
- Fig. 3: ein Teil der Werkzeugeinheit in perspektivischer Ansicht von unten,
- Fig. 4: die Werkzeugeinheit aus Fig. 1-3 in einer Seitenansicht von unten,
- Fig. 5: die Werkzeugeinheit aus Fig. 1-4 in einer Schnittdarstellung von unten,
- Fig. 6: die Werkzeugeinheit aus Fig. 1-5 in einer Seitenansicht von vorne,
- Fig. 7: die Werkzeugeinheit aus Fig. 1-6 in einer Schnittdarstellung von oben,
- Fig. 8: die Werkzeugeinheit aus Fig. 1-7 in einer seitlichen Schnittdarstellung,
- Fig. 9: die Werkzeugeinheit aus Fig. 1-8 in einer weiteren seitlichen Schnittdarstellung und
- Fig. 10: eine Detailansicht der Werkzeugeinheit aus Fig. 9.

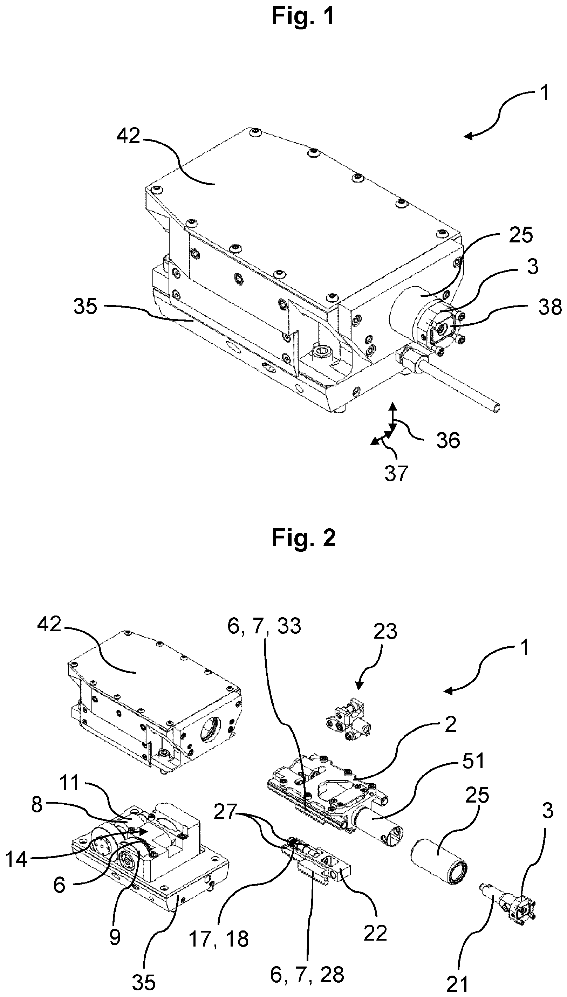

Fig. 1 zeigt die im gesamten mit 1 bezeichnete angetriebene Werkzeugeinheit 1. Die Werkzeugeinheit 1 umfasst einen Stoßschlitten 2, einen Werkzeugträger 3 und eine Antriebswelle 4. Die Antriebswelle 4 überträgt eine Drehbewegung 5 der Antriebswelle 4 auf den Stoßschlitten 2, wobei die Antriebswelle 4 und der Stoßschlitten 2 über ein Getriebe 6 miteinander antriebsverbunden sind. Das Getriebe 6 umfasst eine Zahnstange 7 und zwei Stirnzahnräder 8, 9. Diese sind als ein Vorschubzahnrad 8 und ein Rückhubzahnrad 9 ausgebildet. Das Vorschubzahnrad 8 und das Rückhubzahnrad 9 sind über einen Teilumfang 10 ihrer jeweiligen Stirnflächen 11 verzahnt. Das Vorschubzahnrad 8 überträgt eine Vorschubbewegung 12 auf den Stoßschlitten 2. Das Rückhubzahnrad 9 überträgt eine Rückhubbewegung 13 auf den Stoßschlitten 2.

Eine Drehbewegung 5 der Antriebswelle 4 wird mit einer Getriebestufe 14 des Getriebes 6 in eine gegenläufige Drehbewegung 15, 16 der Stirnzahnräder 8, 9 umgewandelt. Das Vorschubzahnrad 8 dreht sich in der gezeigten Ausführungsform im Uhrzeigersinn 15, während sich das Rückhubzahnrad 9 gegen den Uhrzeigersinn 16 dreht.

Die Zahnstange 7 des Getriebes 6 ist mit dem Stoßschlitten 2 verbunden.

Die Werkzeugeinheit 1 umfasst ein Federelement 17, mit dem eine Rückhubbewegung 13 des Stoßschlittens 2 gefedert gelagert ist, wobei das Federelement 17 mehrere Tellerfederpakete 18 umfasst.

Zur Ausführung einer Abhebebewegung 19 des Werkzeugträgers 3 umfasst die Werkzeugeinheit 1 einen Abhebemechanismus 20. Die Abhebebewegung 19 des Werkzeugträgers 3 erfolgt quer zur Rückhubbewegung 13.

Der Abhebemechanismus 20 umfasst einen Kipphebel 21, an dem der Werkzeugträger 3 angeordnet ist. Der Kipphebel 21 ist zur Ausführung der quer zur Rückhubbewegung 13 des Stoßschlittens 2 ausgerichteten Abhebebewegung 19 des Werkzeugträgers 3 kippbar an dem Stoßschlitten 2 gelagert, sodass er gekippt werden kann.

Der Abhebemechanismus 20 weist eine Linearachse 22 und einen Kniehebel 23 auf. Die Linearachse 22 ist mit dem Kipphebel 21 über den Kniehebel 23 verbunden. Der Kniehebel 23 ist zur Umsetzung einer linearen Bewegung 24 der Linearachse 22 in die Abhebebewegung 19 des Werkzeugträgers 3 eingerichtet.

Der Stoßschlitten 2 weist eine Kipphebel-Aufnahme 51 auf, in der der Kipphebel 21 kippbar gelagert ist.

Um den Kipphebel 21 und die Kipphebel-Aufnahme 51 zu schützen, weist die Werkzeugeinheit 1 eine Hülse 25 auf, die den Kipphebel 21 und die Kipphebel-Aufnahme 51 umgibt.

Die Linearachse 22 ist entlang einer Längsführung 26 längsverschieblich am Stoßschlitten 2 gelagert. Die Linearachse 22 weist zwei Linearverzahnungen 27, 28 auf, von denen eine Linearverzahnung 27 dem Vorschubzahnrad 8 zugeordnet ist und die andere Linearverzahnung 28 dem Rückhubzahnrad 9 zugeordnet ist. Die Linearverzahnung 27 geht also mit dem Vorschubzahnrad 8 in Eingriff, während die Linearverzahnung 28 mit dem Rückhubzahnrad 9 in Eingriff geht.

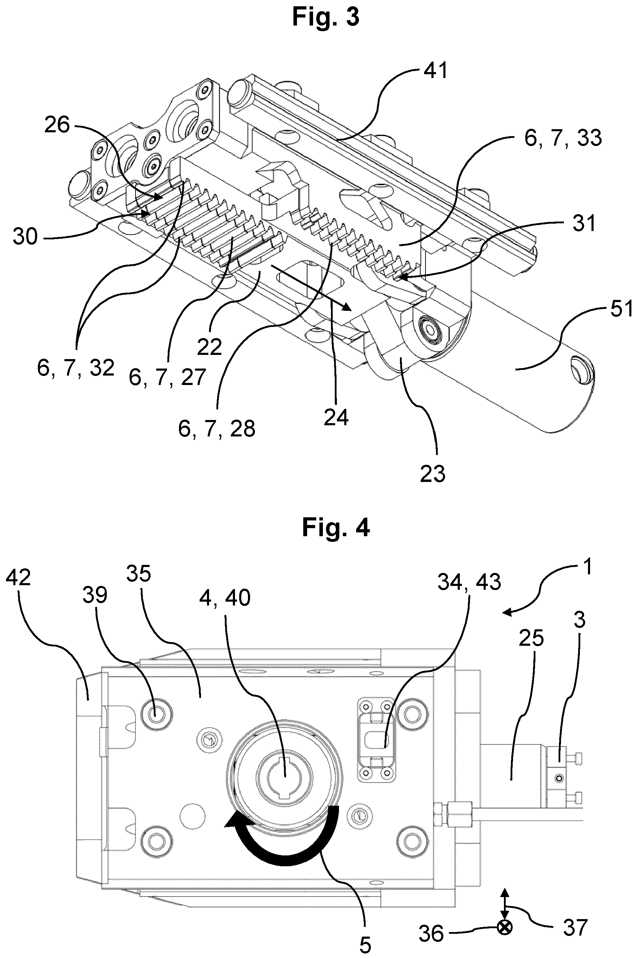

Die Linearverzahnungen 27, 28 sind so angeordnet, dass bei Eingriff des Rückhubzahnrads 9 die Linearachse 22 in einer in Stoßrichtung 29 hinteren Endposition 30 in ihrer Längsführung 26 am Stoßschlitten 2 angeordnet ist. Bei Eingriff des Vorschubzahnrads 8 ist die Linearachse 22 in einer in Stoßrichtung 29 vorderen Endposition 31 innerhalb ihrer Längsführung 26 angeordnet. Fig. 3 zeigt die Anordnung der Linearachse 22 in dem Stoßschlitten 2 in einer in Stoßrichtung vorderen Endposition 31. Da die Linearachse 22 mit dem Kniehebel 23 verbunden ist, führt die zuvor beschriebene Linearverschiebung der Linearachse 22 in ihrer Längsführung 26 am Stoßschlitten 2 zu einer entsprechenden Auslenkung des Kniehebels 23. Die Auslenkung des Kniehebels 23 bewirkt dann eine entsprechende Kippbewegung des Kipphebels 21, was im Rückhub des Stoßschlittens 2 letztendlich die Ausführung der Abhebebewegung 19 des Werkzeugträgers 3 bewirkt. Dann ist nämlich die Linearachse 22 in der in Stoßrichtung 29 hinteren Endposition 30 in ihrer Längsführung 26 am Stoßschlitten 2 angeordnet.

Die Linearverzahnungen 27, 28 der Linearachse 22 weisen denselben Zahnabstand wie die Zahnstangen 32, 33 des Stoßschlittens 2 auf. Die Zahnstange 32 des Stoßschlittens 2 für das Vorschubzahnrad 8 korrespondiert mit der Linearverzahnung 27 der Linearachse 22 für das Vorschubzahnrad 8. Die Zahnstange 33 des Stoßschlittens 2 für das Rückhubzahnrad 9 korrespondiert mit der Linearverzahnung 28 der Linearachse 22 für das Rückhubzahnrad. Somit können die Stirnzahnräder 8, 9 in die Zahnstangen 32, 33 des Stoßschlittens 2 und in die Linearverzahnungen 27, 28 der Linearachse 22 eingreifen.

Die Werkzeugeinheit 1 weist einen Ausrichtmechanismus 34 auf, mit dem eine Winkelstellung und eine Position des Werkzeugträgers 3 relativ zu einer Basis 35 der Werkzeugeinheit 1 einstellbar ist.

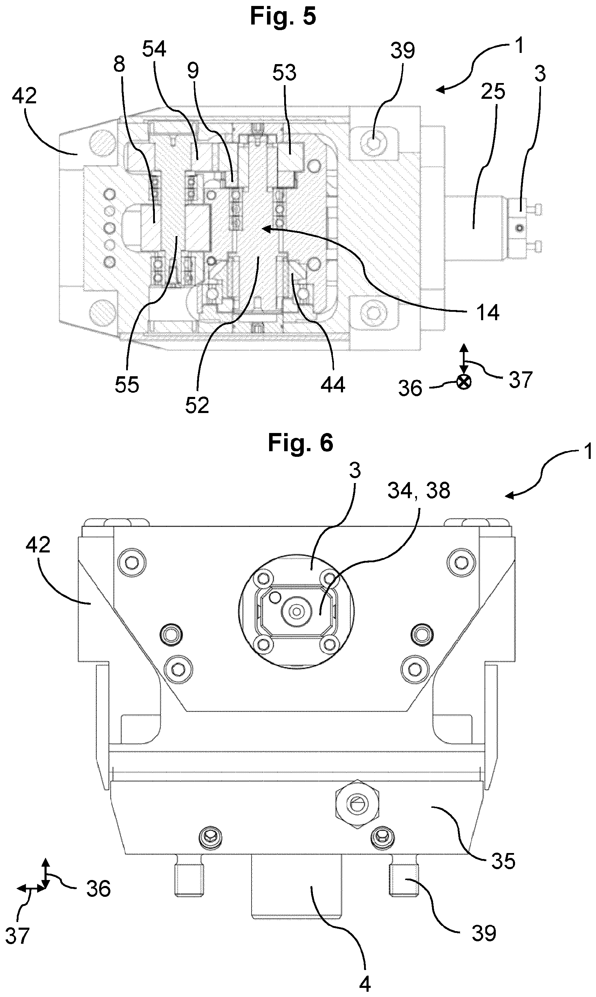

Zur Positionierung des Werkzeugträgers 3 weist der Ausrichtmechanismus 24 zumindest einen Gleitstein 38 auf. Hierbei kann der Ausrichtmechanismus 34 den Werkzeugträger 3 relativ zu einem Gehäuse 42 der Werkzeugeinheit 1 positionieren. Fig. 6 zeigt den Gleitstein 38, mit dem der Werkzeugträger 3 entlang einer Raumachse 37 quer zur Vorschubbewegung 12 positioniert werden kann.

Der Ausrichtmechanismus 34 kann eine Winkelstellung des Werkzeugträgers 3 um eine quer zur Vorschubbewegung 12 ausgerichtete Raumachse einstellen. Hierbei kann der Werkzeugträger 3 beispielsweise um die Raumachse 37 gekippt werden.

Der Ausrichtmechanismus 34 kann auch die Winkelstellung der Werkzeugeinheit 1 relativ zu einer Befestigungsschnittstelle 39 einer mit der Werkzeugeinheit 1 ausgestatteten Werkzeugmaschine (nicht gezeigt) um eine Rotationsachse 40 der Antriebswelle 4 der Werkzeugeinheit 1 einstellen. Die Rotationsachse 40 der Antriebswelle 4 ist bei dem in den Figuren gezeigten Ausführungsbeispiel in Richtung der Raumachse 36 orientiert.

Zum Anschluss der Werkzeugeinheit 1 an eine Befestigungsschnittstelle der Werkzeugmaschine weist die Werkzeugeinheit 1 eine Basis 41 auf. Die Antriebswelle 4 ist an der Basis 41 angeordnet.

Die Werkzeugeinheit 1 wird bestimmungsgemäß an einer in den Figuren nicht gezeigten Werkzeugmaschine verwendet.

Fig. 4 zeigt einen weiteren Gleitstein 43 des Ausrichtmechanismus 34, wobei der Gleitstein 43 an der Basis 41 angeordnet ist und eine Positionierung der Werkzeugeinheit 1 und des Werkzeugträgers 3 quer zur Vorschubbewegung 12 ermöglicht.

Der Stoßschlitten 2 ist mit einer Linearführung 41 in dem Gehäuse 42 geführt.

Fig. 5 zeigt die Getriebestufe 14 in einer Schnittdarstellung. Die Antriebswelle 4, überträgt ihre Drehbewegung 5 über eine Kegelradstufe 44, die zwei Kegelräder umfasst, auf eine Welle 52, an der auch das Rückhubzahnrad 9 angeordnet ist. Die Welle 52 trägt ein Stirnzahnrad 53, das mit einem weiteren Stirnzahnrad 54 in Eingriff steht, um ein Drehmoment auf eine zweite Welle 55 zu übertragen. An der zweiten Welle 55 ist das Vorschubzahnrad 8 angeordnet.

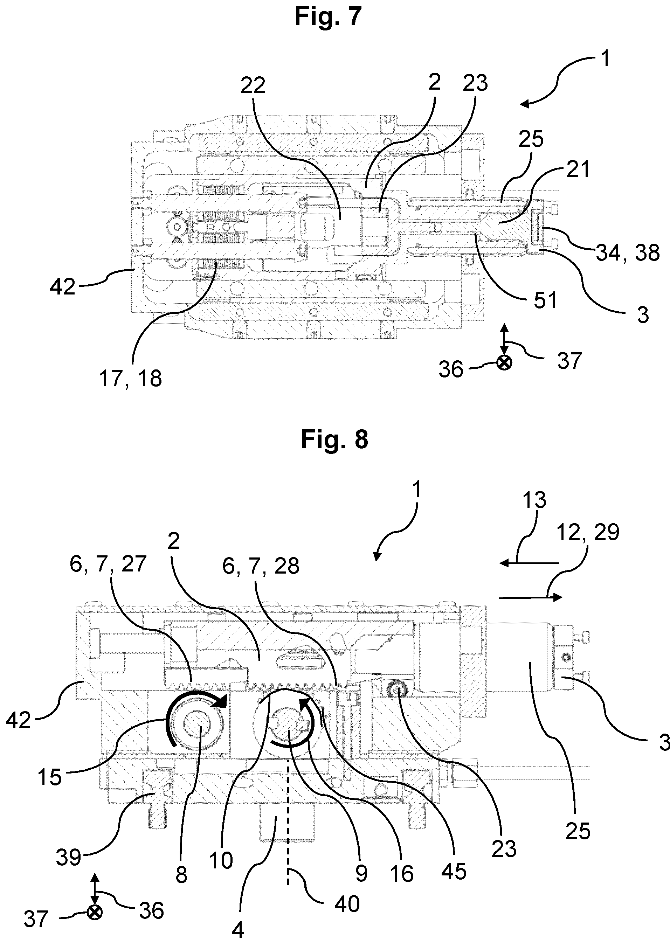

Die Drehrichtungen 15, 16 der Stirnzahnräder 8, 9 sind in Fig. 8 mit gekrümmten Pfeilen dargestellt. Auch ist das über einen Teilumfang 10 verzahnte Rückhubzahnrad 9 mit seinen Zähnen 45 zu erkennen. Die Zähne 45 des Rückhubzahnrads 9 greifen in die Zahnstange 33 des Stoßschlittens 2 ein und bewegen den Stoßschlitten 2 in einer Rückhubbewegung 13.

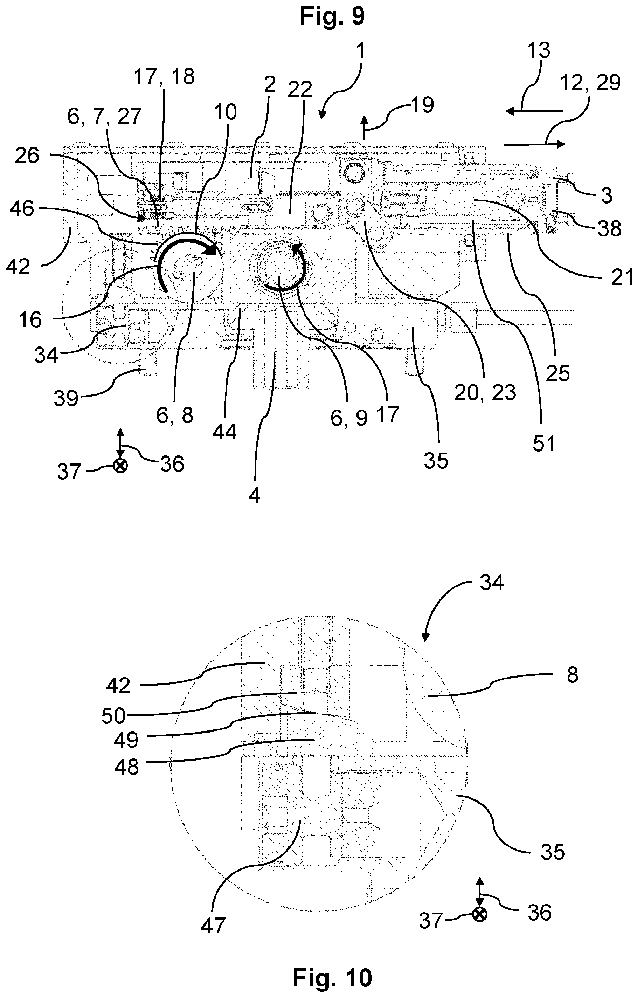

Fig. 9 zeigt, wie die Zähne 46 des Vorschubzahnrads 9 in der Zahnstange 32 des Stoßschlittens 2 für das Vorschubzahnrad eingreifen.

Die in Fig. 10 gezeigte Detailaufnahme des Ausrichtmechanismus 34, zeigt dass an einem der Werkzeugträger 3 abgewandten Seite des Gehäuses 42 eine Schraube 47 in die Basis 35 eingeschraubt werden kann um das Gehäuse 42 in einem Winkel um die Raumachse 37 zu verkippen. Die Raumachse 37 kann der Rotationsachse der Welle 52 entsprechen. Das Einschrauben der Schraube 47 bewirkt, dass ein Gleitstein 48, der eine Gleitschräge 49 aufweist, in einer Richtung der Vorschubbewegung 12 verschoben wird. Ein korrespondierender Gleitstein 50 auf dem das Gehäuse 42 abgestützt ist, verschiebt sich auf der Gleitschräge 49 und wird dadurch angehoben und verkippt so das Gehäuse 42 um die Raumachse 37.

Es wird eine angetriebene Werkzeugeinheit 1 zum Nutenstoßen vorgeschlagen, wobei die Werkezugeinheit 1 einen Stoßschlitten 2, einen Werkzeugträger 3 und eine Antriebswelle 4 umfasst, wobei die Antriebswelle 4 und der Stoßschlitten 2 über ein Getriebe 6 miteinander antriebsverbunden sind, wobei das Getriebe 6 zumindest eine Zahnstange 7 und zumindest zwei Stirnzahnräder 8, 9 umfasst, nämlich ein Vorschubzahnrad 8 und ein Rückhubzahnrad 9, die jeweils nur über einen Teilumfang 10 ihrer Stirnflächen 11 verzahnt sind, wobei das Vorschubzahnrad 8 zur Übertragung einer Vorschubbewegung 12 auf den Stoßschlitten 2 und das Rückhubzahnrad 9 zur Übertragung einer Rückhubbewegung 13 auf den Stoßschlitten 2 eingerichtet ist.

### Bezugszeichenliste

- 1: Werkzeugeinheit
- 2: Stoßschlitten
- 3: Werkzeugträger
- 4: Antriebswelle
- 5: Drehbewegung der Antriebswelle
- 6: Getriebe
- 7: Zahnstange
- 8: Stirnzahnrad, Vorschubzahnrad
- 9: Stirnzahnrad, Rückhubzahnrad
- 10: Teilumfang
- 11: Stirnflächen
- 12: Vorschubbewegung
- 13: Rückhubbewegung
- 14: Getriebestufe
- 15: Drehbewegung, im Uhrzeigersinn
- 16: Drehbewegung, gegen den Uhrzeigersinn
- 17: Federelement
- 18: Tellerfederpaket
- 19: Abhebebewegung
- 20: Abhebemechanismus
- 21: Kipphebel
- 22: Linearachse
- 23: Kniehebel
- 24: lineare Bewegung der Linearachse
- 25: Hülse
- 26: Längsführung
- 27: Linearverzahnung für das Vorschubzahnrad
- 28: Linearverzahnung für das Rückhubzahnrad
- 29: Stoßrichtung
- 30: hintere Endposition
- 31: vordere Endposition
- 32: Zahnstange des Stoßschlittens für das Vorschubzahnrad
- 33: Zahnstange des Stoßschlittens für das Rückhubzahnrad
- 34: Ausrichtmechanismus
- 35: Basis
- 36: Raumachse
- 37: Raumachse
- 38: Gleitstein
- 39: Befestigungsschnittstelle
- 40: Rotationsachse der Antriebswelle
- 41: Linearführung
- 42: Gehäuse
- 43: Gleitstein
- 44: Kegelradstufe
- 45: Zähne des Rückhubzahnrads
- 46: Zähne des Vorschubzahnrads
- 47: Schraube
- 48: Gleitstein
- 49: Gleitschräge
- 50: Gleitstein
- 51: Kipphebel-Aufnahme
- 52: Welle
- 53: Stirnzahnrad
- 54: Stirnzahnrad
- 55: Welle

## Patentansprüche

1. Angetriebene Werkzeugeinheit (1) zum Nutenstoßen umfassend einen Stoßschlitten (2), einen Werkzeugträger (3) und eine Antriebswelle (4), wobei die Antriebswelle (4) und der Stoßschlitten (2) über ein Getriebe (6) miteinander antriebsverbunden sind, wobei das Getriebe (6) zumindest eine Zahnstange (7) und zumindest zwei Stirnzahnräder (8, 9) umfasst, nämlich ein Vorschubzahnrad (8) und ein Rückhubzahnrad (9), die jeweils nur über einen Teilumfang (10) ihrer Stirnflächen (11) verzahnt sind, wobei das Vorschubzahnrad (8) zur Übertragung einer Vorschubbewegung (12) auf den Stoßschlitten (2) und das Rückhubzahnrad (9) zur Übertragung einer Rückhubbewegung (13) auf den Stoßschlitten (2) eingerichtet ist.

2. Werkzeugeinheit (1) nach Anspruch 1, wobei das Getriebe (7) zumindest eine Getriebestufe (14) umfasst, mit der eine Drehbewegung (5) der Antriebswelle (4) in gegenläufige Drehbewegungen (15, 16) der Stirnzahnräder (8, 9) umwandelbar ist.

3. Werkzeugeinheit (1) nach einem der Ansprüche 1 oder 2, wobei zumindest eine Zahnstange (7) des Getriebes (6) mit dem Stoßschlitten (2) verbunden ist.

4. Werkzeugeinheit (1) nach einem der vorherigen Ansprüche, **dadurch gekennzeichnet, dass** die Werkzeugeinheit (1) ein Federelement (17), insbesondere ein Feder-Dämpfer-Element, umfasst, mit dem der Stoßschlitten (2), insbesondere in seiner Vorschubbewegung (12) und/oder in seiner Rückhubbewegung (13), gefedert und/oder gedämpft gelagert ist, vorzugsweise wobei das Federelement (17) zumindest ein Tellerfederpaket (18) umfasst.

5. Werkzeugeinheit (1) nach einem der vorangehenden Ansprüche, **dadurch gekennzeichnet, dass** die Werkzeugeinheit (1) einen Abhebemechanismus (20) umfasst, der zur Ausführung einer Abhebebewegung (19) des Werkzeugträgers (3) quer zur Rückhubbewegung (13) eingerichtet ist.

6. Werkzeugeinheit (1) nach dem vorherigen Anspruch, wobei der Abhebemechanismus (20) einen Kipphebel (21) umfasst, an dem der Werkzeugträger (3) angeordnet ist und der zur Ausführung der quer zur Rückhubbewegung (13) des Stoßschlittens (2) ausgerichteten Abhebebewegung (19) des Werkzeugträgers (3) kippbar an dem Stoßschlitten (2) gelagert ist.

7. Werkzeugeinheit (1) nach dem vorherigen Anspruch, wobei der Abhebemechanismus (20) eine Linearachse (22) und einen Kniehebel (23) aufweist, wobei die Linearachse (22) über den Kniehebel (23) mit dem Kipphebel (21) verbunden und der Kniehebel (23) zur Umsetzung einer linearen Bewegung der Linearachse (22) in die Abhebebewegung (19) des Werkzeugträgers (3) eingerichtet ist.

8. Werkzeugeinheit (1) nach dem vorherigen Anspruch, wobei der Stoßschlitten eine Kipphebel-Aufnahme (51) aufweist, in der der Kipphebel (21) kippbar gelagert ist, und/oder wobei die Werkzeugeinheit (1) eine Hülse (25) aufweist, die den Kipphebel (21) und/oder die Kipphebel-Aufnahme (51) umgibt.

9. Werkzeugeinheit (1) nach einem der beiden vorherigen Ansprüche, wobei die Linearachse (22 ) entlang einer Längsführung (26) längsverschieblich am Stoßschlitten (2) gelagert ist und/oder wobei die Linearachse (22) zwei Linearverzahnungen (27, 28) aufweist, von denen eine dem Vorschubzahnrad (8) und eine dem Rückhubzahnrad (9) zugeordnet ist.

10. Werkzeugeinheit (1) nach dem vorherigen Anspruch, wobei die Linearverzahnungen (27, 28) so an der Linearachse (22) angeordnet sind, dass die Linearachse (22) bei Eingriff des Rückhubzahnrads (9) in einer ersten Endposition, insbesondere in einer in Stoßrichtung (29) hinteren Endposition (30), in ihrer Längsführung (26) angeordnet und bei Eingriff des Vorschubzahnrads (8) in einer zweiten Endposition, insbesondere in einer in Stoßrichtung vorderen Endposition (31), in ihrer Längsführung (26) angeordnet ist.

11. Werkzeugeinheit (1) nach einem der beiden vorherigen Ansprüche, wobei die Linearverzahnungen (27, 28) der Linearachse (22) denselben Zahnabstand wie die zumindest eine Zahnstange (32) des Stoßschlittens (2) aufweist.

12. Werkzeugeinheit (1) nach einem der vorangehenden Ansprüche, **dadurch gekennzeichnet, dass** die Werkzeugeinheit (1) einen Ausrichtmechanismus (34) aufweist, mit dem eine Winkelstellung und/oder Position des Werkzeugträgers (3), insbesondere relativ zu einer Basis (35) der Werkzeugeinheit (1), in zumindest einem Freiheitsgrad einstellbar ist, insbesondere in einer quer zur Vorschubbewegung (12) des Stoßschlittens (2) ausgerichteten Raumachse (36,37).

13. Werkzeugeinheit (1) nach dem vorherigen Anspruch, wobei der Ausrichtmechanismus (24) zur Positionierung des Werkzeugträgers (3) zumindest einen Gleitstein (38,43,48,50) aufweist.

14. Werkzeugeinheit (1) nach einem der beiden vorherigen Ansprüche, wobei der Ausrichtmechanismus (24) dazu eingerichtet ist, eine Winkelstellung des Werkzeugträgers (3) um zumindest eine quer zur Vorschubbewegung (12) ausgerichteten Raumachse (36,37) einzustellen.

15. Werkzeugeinheit (1) nach einem der drei vorherigen Ansprüche, wobei der Ausrichtmechanismus (34) dazu eingerichtet ist, eine Winkelstellung der Werkzeugeinheit (1) relativ zu einer Befestigungsschnittstelle (39) einer mit der Werkzeugeinheit (1) ausgestatteten Werkzeugmaschine um eine Rotationsachse (40) der Antriebswelle (4) der Werkzeugeinheit (1) einzustellen.

16. Werkzeugeinheit (1) nach einem der vorangehenden Ansprüche, **dadurch gekennzeichnet, dass** die Werkzeugeinheit (1) die oder eine Basis (35) zum Anschluss der Werkzeugeinheit (1) an eine Befestigungsschnittstelle einer Werkzeugmaschine aufweist, wobei die Antriebswelle (4) an der Basis (35) angeordnet ist.

17. Werkzeugmaschine mit einer Werkzeugeinheit (1) nach einem der vorherigen Ansprüche.

## Claims

1. Driven tool unit (1) for keyway slotting, comprising a slotting carriage (2), a tool carrier (3) and a drive shaft (4), wherein the drive shaft (4) and the slotting carriage (2) are drivingly connected to one another via a gear mechanism (6), wherein the gear mechanism (6) comprises at least one toothed rack (7) and at least two spur gears (8, 9), specifically a feed gear (8) and a return-stroke gear (9), which are each interlocked over a partial circumference (10) of their end faces (11), wherein the feed gear (8) is configured to transmit a feed movement (12) to the slotting carriage (2) and the return-stroke gear (9) is configured to transmit a return-stroke movement (13) to the slotting carriage (2).

2. Tool unit (1) as claimed in claim 1, wherein the gear mechanism (7) comprises at least one gear mechanism stage (14), by means of which a rotational movement (5) of the drive shaft (4) can be converted into counter-rotating rotational movements (15, 16) of the spur gears (8, 9).

3. Tool unit (1) as claimed in any one of claims 1 or 2, wherein at least one toothed rack (7) of the gear mechanism (6) is connected to the slotting carriage (2).

4. Tool unit (1) as claimed in any one of the preceding claims, **characterised in that** the tool unit (1) comprises a spring element (17), in particular a spring-damper element, by means of which the slotting carriage (2), in particular in its feed movement (12) and/or in its return-stroke movement (13), is mounted in a spring-loaded and/or damped manner, preferably wherein the spring element (17) comprises at least one laminated disk spring (18).

5. Tool unit (1) as claimed in any one of the preceding claims, **characterised in that** the tool unit (1) comprises a lifting mechanism (20) which is adapted to perform a lifting movement (19) of the tool carrier (3) transversely to the return-stroke movement (13).

6. Tool unit (1) as claimed in the preceding claim, wherein the lifting mechanism (20) comprises a rocker arm (21), on which the tool carrier (3) is arranged and which is mounted so as to be able to tilt on the slotting carriage (2) in order to perform the lifting movement (19) of the tool carrier (3) which is oriented transversely to the return-stroke movement (13) of the slotting carriage (2).

7. Tool unit (1) claimed in the preceding claim, wherein the lifting mechanism (20) comprises a linear spindle (22) and a toggle lever (23), wherein the linear spindle (22) is connected to the rocker arm (21) via the toggle lever (23), and the toggle lever (23) is adapted to change a linear movement of the linear spindle (22) into the lifting movement (19) of the tool carrier (3).

8. Tool unit (1) as claimed in the preceding claim, wherein the slotting carriage comprises a rocker arm receiver (51), in which the rocker arm (21) is mounted so as to be able to tilt, and/or wherein the tool unit (1) comprises a sleeve (25) which surrounds the rocker arm (21) and/or the rocker arm receiver (51).

9. Tool unit (1) as claimed in any one of the two preceding claims, wherein the linear spindle (22) is mounted on the slotting carriage (2) so as to be longitudinally displaceable along a longitudinal guide (26) and/or wherein the linear spindle (22) has two linear toothing arrangements (27, 28), of which one is allocated to the feed gear (8) and one is allocated to the return-stroke gear (9).

10. Tool unit (1) as claimed in the preceding claim, wherein the linear toothing arrangements (27, 28) are arranged on the linear spindle (22) such that, upon engagement of the return-stroke gear (9), the linear spindle (22) is arranged in a first end position, in particular in an end position (30) at the rear in the slotting direction (29), in its longitudinal guide (26) and, upon engagement of the feed gear (8), said linear spindle is arranged in a second end position, in particular in an end position (31) at the front in the slotting direction, in its longitudinal guide (26).

11. Tool unit (1) as claimed in any one of the two preceding claims, wherein the linear toothing arrangements (27, 28) of the linear spindle (22) have the same tooth pitch as the at least one toothed rack (32) of the slotting carriage (2).

12. Tool unit (1) as claimed in any one of the preceding claims, **characterised in that** the tool unit (1) comprises an orientation mechanism (34), by means of which an angle position and/or position of the tool carrier (3), in particular relative to a base (35) of the tool unit (1), can be adjusted in at least one degree of freedom, in particular in a spatial axis (36, 37) oriented transversely to the feed movement (12) of the slotting carriage (2).

13. Tool unit (1) as claimed in the preceding claim, wherein the orientation mechanism (24) for positioning the tool carrier (3) comprises at least one sliding block (38, 43, 48, 50).

14. Tool unit (1) as claimed in any one of the two preceding claims, wherein the orientation mechanism (24) is adapted to adjust an angle position of the tool carrier (3) about at least one spatial axis (36, 37) oriented transversely to the feed movement (12).

15. Tool unit (1) as claimed in any one of the three preceding claims, wherein the orientation mechanism (34) is adapted to adjust an angle position of the tool unit (1) relative to a fastening interface (39) of a machine tool, which is equipped with the tool unit (1), about an axis of rotation (40) of the drive shaft (4) of the tool unit (1).

16. Tool unit (1) as claimed in any one of the preceding claims, **characterised in that** the tool unit (1) comprises the or a base (35) for connection of the tool unit (1) to a fastening interface of a machine tool, wherein the drive shaft (4) is arranged on the base (35).

17. Machine tool comprising a tool unit (1) as claimed in any one of the preceding claims.

## Revendications

1. Unité d'outil motorisée (1) destinée au rainurage, comprenant un chariot de poussée (2), un porte-outil (3) et un arbre d'entraînement (4), l'arbre d'entraînement (4) et le chariot de poussée (2) étant reliés entre eux en entraînement par un mécanisme d'entraînement (6), le mécanisme d'entraînement (6) comprenant au moins une crémaillère (7) et au moins deux roues dentées frontales (8, 9), à savoir une roue dentée d'avance (8) et une roue dentée de retour (9), qui sont respectivement engrenées sur une partie de la circonférence (10) de leurs faces frontales (11), la roue dentée d'avance (8) étant agencée pour transmettre un mouvement d'avance (12) au chariot de poussée (2) et la roue dentée de retour (9) pour transmettre un mouvement de retour (13) au chariot de poussée (2).

2. Unité d'outil (1) selon la revendication 1, dans laquelle le mécanisme d'entraînement (7) comprend au moins un étage d'engrenage (14) permettant de convertir un mouvement de rotation (5) de l'arbre d'entraînement (4) en mouvements de rotation opposés (15, 16) des pignons (8, 9).

3. Unité d'outil (1) selon l'une des revendications 1 ou 2, dans laquelle au moins une crémaillère (7) du mécanisme d'entraînement (6) est reliée au chariot de poussée (2).

4. Unité d'outil (1) selon l'une des revendications précédentes, **caractérisée en ce que** l'unité d'outil (1) comprend un élément élastique (17), en particulier un élément ressort-amortisseur, grâce auquel le chariot de poussée (2), notamment dans son mouvement d'avance (12) et/ou dans son mouvement de retour (13), est monté de manière à être suspendu et/ou amorti, l'élément élastique (17) comprenant de préférence au moins un ensemble de ressorts à disques (18).

5. Unité d'outil (1) selon l'une des revendications précédentes, **caractérisée en ce que** l'unité d'outil (1) comprend un mécanisme de levage (20) qui est agencé pour effectuer un mouvement de levage (19) du porte-outil (3) transversalement au mouvement de retour (13).

6. Unité d'outil (1) selon la revendication précédente, dans laquelle le mécanisme de levage (20) comprend un levier basculant (21) sur lequel est disposé le porte-outil (3) est disposé et qui est monté de manière basculante sur le chariot de poussée (2) pour effectuer le mouvement de levage (19) du porte-outil (3) orienté transversalement par rapport au mouvement de retour (13) du chariot de poussée (2).

7. Unité d'outil (1) selon la revendication précédente, dans laquelle le mécanisme de levage (20) comporte un axe linéaire (22) et un levier à genouillère (23), l'axe linéaire (22) est relié au levier basculant (21) par l'intermédiaire du levier à genouillère (23) et le levier à genouillère (23) est agencé pour convertir un mouvement linéaire de l'axe linéaire (22) en mouvement de levage (19) du porte-outil (3).

8. Unité d'outil (1) selon la revendication précédente, dans laquelle le chariot de poussée comporte un logement de levier basculant (51) dans lequel le levier basculant (21) est monté de manière à pouvoir basculer, et/ou dans laquelle l'unité d'outil (1) comporte un manchon (25) qui entoure le levier basculant (21) et/ou le logement de levier basculant (51).

9. Unité d'outil (1) selon l'une des deux revendications précédentes, dans laquelle l'axe linéaire (22) est monté de manière à pouvoir coulisser longitudinalement sur le chariot de poussée (2) le long d'un guide longitudinal (26) et/ou dans laquelle l'axe linéaire (22) comporte deux dentures linéaires (27, 28), dont l'une est associée à la roue dentée d'avance (8) et l'autre à la roue dentée de retour (9).

10. Unité d'outil (1) selon la revendication précédente, dans laquelle les dentures linéaires (27, 28) sont disposées sur l'axe linéaire (22) de telle sorte que l'axe linéaire (22), lors de l'engrènement de la roue dentée de retour (9), se trouve dans une première position d'extrémité, en particulier dans une position d'extrémité arrière (30) dans le sens de poussée (29), et, lors de l'engrènement de la roue dentée d'avance (8), dans une deuxième position d'extrémité, en particulier dans une position d'extrémité avant (31) dans le sens de poussée, dans son guide longitudinal (26).

11. Unité d'outil (1) selon l'une des deux revendications précédentes, dans laquelle les dentures linéaires (27, 28) de l'axe linéaire (22) présentent le même pas de dent que la au moins une crémaillère (32) du chariot de poussée (2).

12. Unité d'outil (1) selon l'une des revendications précédentes, **caractérisée en ce que** l'unité d'outil (1) comporte un mécanisme d'alignement (34) avec lequel une position angulaire et/ou la position du porte-outil (3), notamment par rapport à une base (35) de l'unité d'outil (1), est réglable selon au moins un degré de liberté, notamment selon un axe spatial (36, 37) orienté transversalement au mouvement d'avance (12) du chariot de poussée (2).

13. Unité d'outil (1) selon la revendication précédente, dans laquelle le mécanisme d'alignement (24) comporte au moins un coulisseau (38, 43, 48, 50) pour le positionnement du porte-outil (3).

14. Unité d'outil (1) selon l'une des deux revendications précédentes, dans laquelle le mécanisme d'alignement (24) est agencé pour régler une position angulaire du porte-outils (3) autour d'au moins un axe spatial (36, 37) orienté transversalement au mouvement d'avance (12).

15. Unité d'outil (1) selon l'une des trois revendications précédentes, dans laquelle le mécanisme d'alignement (34) est agencé pour régler une position angulaire de l'unité d'outil (1) par rapport à une interface de fixation (39) d'une machine-outil équipée de l'unité d'outil (1) autour d'un axe de rotation (40) de l'arbre d'entraînement (4) de l'unité d'outil (1).

16. Unité d'outil (1) selon l'une des revendications précédentes, **caractérisée en ce que** l'unité d'outil (1) comporte la ou une base (35) pour le raccordement de l'unité d'outil (1) à une interface de fixation d'une machine-outil, l'arbre d'entraînement (4) étant disposé sur la base (35).

17. Machine-outil comprenant une unité d'outil (1) selon l'une des revendications précédentes.
